# EUROPEAN PATENT APPLICATION

(11) **EP 4 345 679 A1**
(43) Date of publication of application: **03.04.2024**
(21) Application number: 22386065.1
(22) Date of filing: 28.09.2022
(51) Int. Cl.: G06F 30/28, F28C 3/04, F28F 13/18, G06F 1/20, H02K 5/20, H05K 7/20, G06F 111/06, G06F 113/18, G06F 119/08

(54) **METHOD FOR DETERRMINING A COOLING STRUCTURE**

(71) Applicant: Corintis SA, 1015 Lausanne (CH)
(72) Inventor: Van Erp, Remco, 1004 Lausanne (CH); Salazar De Troya, Miguel Angel, 1007 Lausanne (CH); Boutsikakis, Athanasios, 1022 Chavannes-près-Renens (CH)
(74) Representative: P&TS SA (AG, Ltd.)

(57) **Abstract**

The invention relates to a method for determining a manufacturable cooling structure (6,6') for cooling a semiconductor device (9,13) during operation, wherein the method receives as input (10) at least i) physical parameters of the semiconductor device, wherein the physical parameters are related to physical properties of the semiconductor device, and ii) an array of numbers (1) indicative of a spatial power distribution of the semiconductor device, wherein the method comprises the following steps: 1) determining (11), using an optimization algorithm, a cooling structure (6,6') based on the received input (10), and 2) providing as output (12) the determined cooling structure (6,6') in a data format based on which the determined cooling structure (6,6') can be physically manufactured (9).

## Description

### Field of the invention

The present invention relates to a method for determining a manufacturable cooling structure for cooling a semiconductor device, to a semiconductor device and to an electronic design automation tool.

### Background of the invention

Since the early 2000s, each successive node size in semiconductor manufacturing has resulted in an increase in heat generated per unit area. Extracting this heat is essential, as overheating of a semiconductor device typically negatively impacts device performance, efficiency and reliability: High temperatures lead to an increase in leakage currents, which result in power losses, an increase in sheet resistance due to self-heating degradation; higher device temperature and temperature swings can be directly correlated to a reduction in the mean time before failure. In addition to silicon logic devices, such as central processing units (CPUs), graphics processing units (GPUs), tensor processing units (TPUs), field programmable gate arrays (FPGAs) and other application-specific integrated circuits (ASICs), this trend of rising heat fluxes and their negative impact on performance and reliability also holds for power electronic, optoelectronics and RF electronics, on silicon and other semiconductors such as GaAs, SiC, GaN, etc.

With rising heat fluxes, extracting this heat is becoming increasingly challenging. Traditional *remote-cooling* paradigms require this heat, generated in nanometer-sized hot spots, to travel through a semiconductor die, then through layers of packaging and thermal interfaces before it finally reaches a heat sink. A large distance between the heat source and the heatsink leads to an increase in thermal resistance. Secondly, all these layers and interfaces introduce a barrier for heat transfer, which introduces additional thermal resistances. As a result, a large temperature difference occurs between the hot spot of the semiconductor device and the heat sink.

Micro-scale liquid cooling is a well-known technology to extract highly concentrated heat from semiconductor devices. Micro-scale features benefit from a high surface-to-volume ratio, which improves convective heat transfer. Secondly, micro-scale liquid cooling often operates in a laminar flow regime. Fully developed flow in the laminar flow regime is characterized by a constant Nusselt number. As a result, with decreasing feature size, a constant Nusselt number will result in an increased heat transfer coefficient. Combining these features makes it such that micro-scale liquid cooling can extract over 1 kW/cm² of heat flux, while maintaining temperature rises below 60 K.

In contrast to traditional air and liquid cooling methods, the high heat extraction capability of micro-scale liquid cooling enables the extraction of high heat fluxes from within the footprint of the semiconductor device. This eliminates the need for spreading the heat to larger surface areas; instead, a microfluidic heat sink can have the same size as the silicon chip. Moreover, the cooling structure can be integrated directly within the semiconductor device, to eliminate the poor heat transfer due to layers and interface between the heat source and heat sink. This so-called *direct cooling* approach has been extensively studied for several decades.

However, despite the high heat extraction capabilities of microfluidic cooling, pressure drop is often a concern. Smaller features enable higher heat transfer, but cause a high pressure drop. This effect is particularly pronounced for large-area chips. If the hydraulic resistance becomes too high, the maximum flow rate will be limited, causing a high coolant temperature rise. Optimizing the cooling design to minimize hot-spot temperatures of the chip, under the constraint of a maximum pressure drop, is therefore a challenging problem.

Current methods often rely on parametric optimization: using a regular structure of fins, pins, channels or other repetitive structures whose shape can be defined by parameters such as width, radius, spacing, diameter, etc. Optimizing these parameters to maximize heat transfer and minimize pressure drop is a well-studied problem and many solutions exist.

However, most of these parametric optimization methods assume a uniform heat flux, whereas a real semiconductor has a very non-uniform heat flux. The use of parametric optimization methods is not easily adapted to such a problem, because this does not allow the branching and merging of channels in areas where this might be beneficial. However, despite the significant benefits of such a structure, optimizing its design is challenging. Even for the skilled designer, designing such a structure based on trial and error is a very time-consuming process. There is therefore a need for a platform that can dynamically tailor the layout of a cooling channel beyond the constraints of a parametrized shape.

It is an object of the present invention to mitigate at least some of the disadvantages associated with methods known from the prior art for determining a cooling structure for cooling a semiconductor device.

### Summary of the invention

According to a first aspect of the present invention, there is provided a method for determining a manufacturable cooling structure for cooling a semiconductor device during operation, involving the steps recited in claim 1. Further features and embodiments of the method of the present invention are described in the dependent patent claims.

The invention relates to a method for determining a manufacturable cooling structure for cooling a semiconductor device during operation, wherein the method receives as input at least i) physical parameters of the semiconductor device, wherein the physical parameters are related to physical properties of the semiconductor device, and ii) an array of numbers indicative of a spatial power distribution of the semiconductor device, wherein the method comprises the following steps: 1) determining, using an optimization algorithm, a cooling structure based on the received input, and 2) providing as output the determined cooling structure in a data format based on which the determined cooling structure can be physically manufactured.

The input provided to the method comprises an array (or matrix) of numbers indicative of a spatial power distribution of the semiconductor device, which array (or matrix) of numbers indicative of a spatial power distribution may be embodied as a spatial power distribution map of the semiconductor device. The semiconductor device may be embodied as a silicon logic device such as a CPU, GPU, TPU, FPGA, ASIC, XPU, as a discrete device such as a transistor or diode, as a power integrated circuit, or as an optoelectronic device. The spatial power distribution map may be provided as a uniformly spaced grid, where each cell in the grid represents a heat flux or average power dissipation (of the semiconductor device) per cell. The spatial power distribution map may also comprise shape functions that reconstruct a continuous spatial power distribution map. The granularity of the spatial power distribution map may vary, specifically depending on the semiconductor device that it may represent. Typical cell sizes may extend from several micrometres and up to several millimetres. Cells may also be spaced in a non-uniform manner, with cells potentially overlapping, such as a background heat flux with several higher heat flux areas located around areas that have higher power dissipation. Such non-uniformly spaced spatial distribution power maps may also be reconstructed from a floorplan of an integrated circuit, with functional blocks in the floorplan being mapped onto a spatial power distribution map. The spatial power distribution map may also be provided by a function mapping temperature onto spatial power distribution: this way, a simulated (or measured) temperature of a semiconductor device may be converted into a spatial power distribution map.

The method further receives physical parameters of the semiconductor device as input. These physical parameters may comprise material properties of a die on which device logic is arranged and of a coolant (cooling liquid for the cooling structure to be determined), and other relevant dimensions such as the thickness of the die. Die thickness can be between several micrometres and up to a few millimetres. However, in most cases, a value between 0.3 and 2 mm is considered typical. Another physical parameter that can be selected is the separation between the heat source and the convective cooling structure to be determined. The optimized cooling structure can directly be integrated into the semiconductor device, with the semiconductor device being embodied, for example, as a silicon chip and with the cooling structure being etched into a side of the die opposite to a side on which the device logic is provided. Alternatively, the cooling structure can be bonded or attached to the heat-generating semiconductor device. In this case, the physical parameters of the thermal interface material or the bond interface between the two structures may be taken into account as well by the optimization algorithm which determines the cooling structure.

The method according to the first aspect of the present invention may also receive a plurality of arrays of numbers indicative of a spatial power distribution/spatial power distribution maps and/or a plurality of different value assignments to the physical parameters as input. This way, the optimization algorithm may be carried out a plurality of times, e.g., on each of the plurality of arrays of numbers indicative of a spatial power distribution. A user may be presented with the different cooling structures determined in the different runs of the optimization algorithm, and the user may decide on the right solution, or the optimal design of the cooling structure may be automatically selected from the different cooling structures, e.g., by choosing a cooling structure with a minimum loss of a loss function used by the optimization algorithm.

The method according to the first aspect of the present invention may determine (microfluidic) cooling structures which may be integrated in a two-layer system comprising a solid material layer with device logic, or which may be integrated with a multi-layer semiconductor device, or which may be integrated in a 2.5D semiconductor device comprising, on a common substrate, chiplets and a main computing die, or which may be 3D integrated into a multi-layer semiconductor device, for example. The provided physical parameters provide details on such different embodiments which are used during optimization.

After the optimization algorithm has converged, the following steps may be performed. Firstly, the user may be presented with a figure of the optimized design of the cooling structure, the corresponding temperature map on the surface of the semiconductor device assuming it is cooled by the determined cooling structure, a fluid layer, the total pressure drop and flow rate, and the distribution of pressure drop through the fluid channels of the cooling structure.

Using the final geometry of the cooling structure, a series of simulations may be performed with varying flow rates. At each flow rate, metrics such as pressure drop, flow rate and maximum temperature may be recorded. The data generated in these simulations may be shown in figures that help the user decide in comparing the selected topology versus other cooling methods. Typical figures may include the pressure drop versus flow rate, temperature rise versus flow rate, thermal resistance versus pumping power, performance coefficient versus maximum heat flux, maximum heat flux versus pumping power, thermal performance factor (TPF), which is a ratio of improvement in heat transfer rate to friction factor increment, or any other performance benchmark. In addition to the data points collected from these simulations, data points from a library of previously calculated or experimentally measured results can be added to these figures to compare the performance versus existing designs. The physical parameters provided as input to the method according to the first aspect of the invention may also comprise locations of temperature sensors which may be physically placed at the specified locations on the manufactured semiconductor device with determined (optimized) cooling structure. During simulation, temperatures may be provided at the specified locations and compared to actually measured temperatures using the temperature sensors on the manufactured semiconductor device; this way, accuracy of the simulation may be assessed.

The determined cooling structure is provided in a filetype suitable for manufacturing. To be compatible with lithography, for example, the cooling structure may be provided in filetypes such as a GDSII, CIF, DXF or OASIS. Since these filetypes are vector based, and the topology optimization of the cooling structure may be performed on a grid, this conversion can be considered as a pixel to vector conversion.

In an embodiment of the method according to the invention, the physical parameters comprise i) dimension parameters of the semiconductor device, the dimension parameters being embodied at least as width, length, and thickness of the semiconductor device, and/or ii) material properties of a die of the semiconductor device with device logic on the die, and/or iii) material properties of a cooling fluid of the cooling structure, wherein the cooling fluid can be liquid embodied as water, or as water-glycol mixtures, or as refrigerant, or as dielectric coolant, or as mineral oil, and/or iv) material properties of a physical connection between a cooling structure die with the cooling structure and a die of the semiconductor device with device logic on the die. The cooling fluid, other than liquid, may also be embodied as air or as another suitable gas.

In a further embodiment of the method according to the invention, the cooling structure determined using the optimization algorithm is configured to be physically manufactured at least partly on the die of the semiconductor device with device logic, and/or the cooling structure determined using the optimization algorithm is configured to be physically manufactured at least partly on the cooling structure die, with the cooling structure die being configured to be bonded and/or attached to the die of the semiconductor device with device logic.

In a further embodiment of the method according to the invention, the array of numbers indicative of a spatial power distribution of the semiconductor device is embodied as a two-dimensional array of power dissipated per unit area of the semiconductor device.

In a further embodiment of the method according to the invention, the method further receives as input at least one region of the semiconductor device as at least one design constraint, and the optimization algorithm is constrained to determine a cooling structure with no cooling structure parts in at least one region of the cooling structure corresponding to the at least one region of the semiconductor device.

Design constraints may consist of defining fixed areas of the die of the semiconductor device that should remain solid, such as the edges of the die, or certain areas where out-of-plane interconnects such as vias in multi-layer semiconductor devices or connections to RF antenna components may be present on the die. Other design constraints can be minimal feature size, which may be done to prevent clogging depending on a filter size used in the final system.

In a further embodiment of the method according to the invention, a loss function and/or optimization constraint used by the optimization algorithm is based on at least one of i) pressure, ii) flow rate, iii) maximum temperature, iv) average temperature, v) median temperature, vi) temperature gradient, and wherein the optimization algorithm performs extremization, in particular minimization or maximization, of the loss function, the loss function in particular being constrained by the at least one optimization constraint.

An objective function/loss function/cost function may be defined for the optimization carried out by the optimization algorithm. This can be the reduction of maximum temperature, average temperature, temperature gradients, pressure drop, flow rate, or a combination of these parameters. These parameters can in addition function as constraints as well, such as fixing the mass flow rate and constraining the pressure drop while minimizing temperature rise.

In a further embodiment of the method according to the invention, the optimization algorithm uses a two-and-a-half-dimensional model during optimization, wherein the optimization algorithm is configured to assume a parabolic flow profile in an out-of-plane dimension of the cooling structure during the determining of the cooling structure. The optimization algorithm may also assume a temperature profile within the fluid and a linear temperature profile within the semiconductor material in the out-of-plane dimension of the cooling structure during the optimization.

In a further embodiment of the method according to the invention, the optimization algorithm uses as further optimization constraint at least one manufacturing constraint, in particular lithography constraints and etching constraints, relating to a manufacturing process of the determined cooling structure.

Manufacturing constraints may be set depending on the method used for realizing the final cooling structure. In the case of lithography, the manufacturing constraints may consist of a minimum feature size depending on the lithography system used. When deep reactive ion etching (DRIE) is used for creating the channels, a vertical sidewall profile can be assumed. The etch lag during DRIE can be integrated into the system to implement a smaller depth for more narrow features compared to wider openings. For laser machining, a beam radius and sidewall curvature can be considered. For CNC machining, a minimum end mill radius can be defined. Manufacturing constraints may be also received as input by the method according to the first aspect of the present invention.

In a further embodiment of the method according to the invention, the optimization algorithm determines a number of inlets and outlets of the cooling structure as well as positions of the determined inlets and outlets by taking into account packaging methodology constraints.

Channel layout design of the cooling structure to be determined may be limited to two dimensions due to manufacturing constraints from the lithography and etching process, neglecting significant performance gains obtained when letting the optimization algorithm take advantage of the third dimension. Similarly, the design of the manifold required to connect the external pipe system to the inlets and outlets within the channel layout of the cooling structure may be a challenge in and of itself. In general, it is not trivial to position the inlets and outlets without suffering a significant pressure drop in the manifold. The design of both the manifold and the channel layout of the cooling structure may be integrated into a single optimization framework subject to the manufacturing constraints of each device. The optimization algorithm may determine a two-dimensional geometry for the channel layout of the cooling structure and a full three-dimensional geometry for the manifold. This way, the channel layout of the cooling structure may take advantage of the third dimension through the manifold. The optimization of the number of inlets and outlets of the cooling structure may also be carried out independently from a possible optimization of the manifolds into which inlets and outlets respectively converge. The structure of the manifold may be pre-given or determined as well by the method according to the first aspect of the present invention.

In a further embodiment of the method according to the invention, the optimization algorithm used for determining the cooling structure based on the received input comprises the following steps: 1) determining a mesh, in particular embodied as a regularly spaced mesh or embodied as a mesh based on the array of numbers indicative of a spatial power distribution and/or on the at least one design constraint and/or on the manufacturing constraints, 2) mapping the array of numbers indicative of a spatial power distribution onto the mesh, and optionally mapping the at least one design constraint onto the mesh, 3) starting with an initialization geometry of the cooling structure on the mesh, adapting a current geometry of the cooling structure in an iterative manner until a final geometry of the cooling structure is determined, wherein at each optimization iteration the following sub-steps are carried out: i) simulating a physical behaviour of the cooling structure with the current geometry using at least modelling equations, in particular Navier-Stokes equations and heat transfer equations, and the physical parameters, ii) determining, based on the simulated physical behaviour, at least one current value of the loss function, iii) determining at least one gradient of the, optionally constrained, loss function with respect to variations in the geometry of the cooling structure away from the current geometry, in particular using an adjoint method, and iv) providing the determined at least one gradient to a set of, in particular programmed, equations which updates the current geometry in such a way that the, optionally constrained, loss function is further extremized.

Optimization may start by breaking down a design space on which the cooling structure is determined into a fine mesh. This can be a 2D mesh to reduce the computational cost, with assumptions made about the flow profile in the third dimension, or in a complete 3D manner. The mesh may either be selected to be fine enough to resolve the smallest features that are anticipated under the design and manufacturing constraints, or a homogenization approach may be used to approximate smaller features with a rougher mesh. In addition, the mesh may be fine enough to resolve most of the eddies that may arise in the simulated flow, depending on the Reynolds number which can be estimated a priori based on the macroscopic design parameters of the optimization (pressure drop or flow rate). The smallest eddies in the flow could be modelled using Large Eddy Simulation incorporating the Smagorinsky turbulence model or any other turbulence model. The mesh can either be a regular spaced mesh, or the mesh may be adapted to the spatial power distribution map/the array of numbers indicative of a spatial power distribution. A possible way to adapt the mesh to the spatial power distribution map is by refining the mesh in areas with higher heat fluxes as it may be anticipated that finer features in this region will be identified during the optimization. In addition, gradient regions can be introduced between fine and coarse mesh regions at the transition between varying heat fluxes. The spatial power distribution map, boundary conditions, and design constraints may be mapped onto the mesh using projection methods or interpolation techniques based on a nearest neighbour algorithm, range searches or nested grids.

An optimized geometry of the cooling structure based on (user) inputs to the method according to the first aspect of the present invention may subsequently be determined. This may be done in an iterative manner with optimization methods using the geometry of the cooling structure as the optimization variable. Different geometry optimization methods could be used for this purpose, all under the umbrella of so-called topology optimization methods, where the geometry can arbitrarily change the number of holes within it. Topology optimization methods may be classified according to the geometry parametrization: density methods define the geometry with a continuous field that varies between one for the fluid phase and zero for the solid phase, level set methods use the isocontour of a scalar function as the boundary of the geometry and phase fields methods use a smoothed step function as the boundary separating the fluid and solid phases. Regardless of the approach, the geometry defining the fluid and solid phases may be embedded in equations modelling the relevant physical phenomena: Navier-Stokes equations and heat transfer equations modelling heat convection occurring in the channels and the heat conduction in the substrate layer or in the multiple layer (the heat transfer equations model the heat conduction and convection, and the Navier-Stokes equations model fluid behaviour). At each optimization iteration, for a current geometry estimation, these physics equations may be solved to assess several performance metrics such as pressure drop, maximum temperature or heat dissipation. Similarly in each optimization iteration, the gradients of these performance metrics with respect to changes in the geometry may be calculated using the adjoint method and fed to a nonlinear set of, in particular programmed, equations which may update the geometry of the cooling structure to one with better performance. If necessary, the high frequency modes of the geometry parametrization may be filtered out to improve the stability of the optimization. This step can be achieved by means of a convolution process, as the solution of a partial differential equation or by using a more restricted parametrization.

Information in the spatial power distribution map can be used to accelerate the optimization. Indeed, higher heat flux regions may require a higher solid-fluid surface area and vice versa for lower heat flux regions. As such, the initial geometry used by the optimization algorithm may reflect this a priori knowledge; optimization may therefore proceed from a more optimal starting point.

Due to the potentially high inertial forces in fluids/cooling liquids/coolants within the cooling structure, solving the fluid equations (Navier-Stokes equations) may require special care. The nonlinear nature of these equations requires a nonlinear solver that starts with an initial estimation of the solution and iterates until convergence to the equilibrium solution satisfying the equations. Commonly used nonlinear solvers such as the Newton method are not sufficient and do not converge when starting from an initial estimation far from the equilibrium. A strategy to ensure that convergence is guaranteed regardless of the initial estimation is necessary. Several approaches can fulfil this goal: homotopy methods, parameter continuation methods, damped Newton method, full approximation schemes, etc.

The aforementioned solvers (physical equations as Navier-Stokes equations and heat transfer equations, adjoint method for obtaining gradients, filtering) could be replaced by Reduced-Order Models (hereafter ROMs). ROMs could be generated using the following methods: via data of previous/on-the-fly simulations, via physical/empirical approximations, or using a combination of these two. More specifically, these ROMs could be trained given a set of simulation (topology optimization) data either by applying a Proper Orthogonal Decomposition (hereafter POD) or by using a Neural Network or Deep Reinforcement Learning or any other Artificial Intelligence or Machine Learning inspired methods. A ROM may be used for accelerating analysis of a semiconductor device with determined (optimized) cooling structure. In an electronic design automation tool, for example, a ROM may be used for quickly simulating behavioural aspect of the semiconductor device with determined cooling structure instead of having to solve computationally costly physical equations such as Navier-Stokes equations and/or heat transfer equations.

More specifically, in the case of POD-ROMs, the ROM can be trained in such a way as to be able to replicate the optimization procedure. To do so, for every optimization iteration, the solution of the degrees of freedom (velocity, pressure, and temperature and/or density fields) coming from the Full-Order Model (FOM) may be stored in a vector (in a non-dimensional form). This vector may then be stored as a column in a matrix whose columns represent a different optimization iteration, and the rows may represent the degrees of freedom of the problem. Then, by performing an incremental (on-the-fly) Singular Value Decomposition (SVD), the solution can be decomposed down to its singular values and vectors (POD modes). Every such singular value may represent a different level of energy in the system so that the highest one may correspond to a POD Mode (hereafter POM) that contains the bulk of information of the aforementioned solution, while the lowest one may correspond to a POM that contains detailed information about the solution. This set of POMs constitutes an optimal vector basis on which it is possible to project either a solution or the problem (system of equations) itself. In fact, it is possible to consider the unknown degrees of freedom as a linear combination of a subset of the singular vector basis (truncation dimension to be decided based on various criteria: energy, maximum element, a posteriori error, etc.). This in turn allows performing a Galerkin projection of the system of equations on the selected subset of POMs that would yield a truncated linear system of equations that constitutes the ROM. Solving this system for the coefficients of the aforementioned projection may allow to calculate the solution of the system by reprojecting the coefficients onto the POM basis. One of the advantages of such a ROM is that it can be used either on-the-fly or as a post-processing tool. The former, i.e., on-the-fly use, may allow to speed up a considerable number of optimization iterations based on a few FOM iterations of the same problem, while the latter, i.e., post-processing use, may imply that a ROM that is trained on a problem defined by a set of parameters could be also used for another problem of a neighbouring set of parameters, given that the physical regime would remain the same (e.g., similar Reynolds number, laminar/turbulent system, etc.). Such a ROM could also be used as a digital twin as part of an electronic design automation loop to allow an integration of the cooling solution while avoiding a considerable increase in simulation time.

In a further embodiment of the method according to the invention, the initialization geometry of the cooling structure is determined based on the array of numbers indicative of a spatial power distribution.

According to a second aspect of the present invention, there is provided a semiconductor device comprising a cooling structure determined using a method according to the first aspect of the present invention, wherein the cooling structure is manufactured using optical lithography.

In an embodiment of the semiconductor device according to the invention, device logic of the semiconductor device is provided on one side of a die of the semiconductor device, and wherein the cooling structure is provided on the opposite side of the die with respect to the side on which the device logic is provided.

In a further embodiment of the semiconductor device according to the invention, the semiconductor device comprises a first die on which device logic of the semiconductor device is provided, and the semiconductor device comprises a second die on which the cooling structure is provided, wherein a physical connection between the first die and the second die is embodied as bonding or attachment between the first die and the second die.

According to a third aspect of the present invention, there is provided an electronic design automation tool, wherein the electronic design automation tool comprises programme code, which when executed on a computing device, causes the computing device to carry out a method according to the first aspect of the present invention, and wherein the electronic design automation tool further comprises programme code, which when executed on a computing device, causes the computing device to carry out floorplanning providing a floorplan of device logic of a semiconductor device and/or post-layout analysis, and wherein the electronic design automation tool is configured to determine, based on at least the floorplan and using post-layout analysis, an array of numbers indicative of a spatial power distribution of the semiconductor device, and wherein the programme code of the electronic design automation tool for determining a cooling structure is configured to use the accordingly determined array of numbers indicative of a spatial power distribution as input.

The programme code which implements a method according to the first aspect of the present invention may alternatively also be provided a separate cooling structure design automation tool which may be independent of the electronic design automation tool). Symmetries and boundary conditions of a semiconductor device for which a cooling structure is to be determined may be defined in the electronic design automation tool (or alternatively in the cooling structure design automation tool). Symmetries can be defined to reduce design space in which an optimized design for the cooling structure is sought. For example, in case the spatial power distribution map has certain symmetries, the optimization domain can be reduced in order to reduce the computational resources required to run the optimization algorithm.

Two important steps can in general be identified at the chip-design level: Floorplanning, or routing, which decides the physical location of transistors, or blocks of transistors, on the integrated circuit, and post-layout analysis, which determines the power dissipation and resulting temperature map of the integrated circuit (IC) based on the floorplan. Due to the temperature-dependent nature of semiconductor devices, the power dissipation of the IC depends on the temperature, and the temperature depends on the power dissipation. Hence, a temperature map can be established iteratively, or under a set of assumptions. In the electronic design automation tool according to the third aspect of the present invention, a method according to the first aspect of the present invention is configured to interact with floorplanning and post-layout analysis in the following manner: Based on the floorplan determined by floorplanning and certain assumptions on temperature, the spatial power distribution map may be calculated in the post-layout analysis. This spatial power distribution map may be provided to a sub-routine of the electronic design automation tool, which sub-routine implements a method according to the first aspect of the present invention and which generates a cooling structure. Using the resulting temperature obtained after cooling the IC with the determined cooling structure, an updated spatial power distribution map can be calculated. If the resulting values are within a certain limit, and pass the requirements, it is accepted.

Alternatively, the optimization algorithm of the method according to the first aspect of the present invention can be used in an iterative manner together with the floorplanning and post-layout analysis in the electronic design automation tool. For each floorplan or series of floorplans, first, a spatial power distribution map may be obtained for which a cooling structure can be determined, and subsequently it can be decided whether the designed IC and cooling structure together meet the required specifications. The electronic design optimization and cooling design optimization may be repeated in an iterative process in the electronic design automation tool to find a combined optimum for electronic and cooling design. Both optimizations can follow a distinct set of optimization parameters, or one global loss function can be defined for both optimization steps.

As semiconductor devices may operate under varying conditions, multiple distinct spatial power distribution maps may represent different operating conditions. For the design of a cooling structure, a collection of spatial power distribution maps may therefore be provided as input to the method according to the first aspect of the present invention or to the electronic design automation tool according to the third aspect of the present invention. The electronic design automation tool may decide on a representative spatial power distribution map that, under all or most operating conditions, will satisfy the design objectives. One possible way to obtain such a representative spatial power distribution map is to iterate over all input spatial power distribution maps, and for each cell of a grid on which all input spatial power distributions maps are provided, the maximum value of any of the input spatial power distribution maps on that cell is taken as representative value. The resulting spatial power distribution map can be considered a worst-case spatial distribution power map for optimization purposes.

Instead of a fixed spatial power distribution map, transient spatial power distribution maps can be provided as input to the method according to the first aspect of the present invention or to the electronic design automation tool according to the third aspect of the present invention. A transient spatial power distribution map can be considered as a time series of multiple spatial power distribution maps and can be considered in a similar manner as previously described, i.e., finding a corresponding maximum worst-case spatial power distribution map which corresponds to the maximum value per cell found over the complete temporal range of the data set. After optimization, a temperature time-series can be reconstructed based on the transient spatial power distribution map.

### Brief description of the drawings

Exemplar embodiments of the invention are disclosed in the description and illustrated by the drawings in which:
Figure 1 schematically illustrates an embodiment of the method for determining a manufacturable cooling structure for cooling a semiconductor device during operation;
Figure 2 schematically illustrates a microfluidic cooling structure with a separately designed manifold;
Figure 3 schematically illustrates a microfluidic cooling structure which is jointly designed with a manifold;
Figure 4 schematically illustrates a method according to the invention;
Figure 5 schematically illustrates a semiconductor device with a cooling structure provided on a separate die;
Figure 6 schematically illustrates an overlay of a spatial power distribution map and a corresponding determined cooling structure;
Figure 7 schematically illustrates a cross-section of a semiconductor device with an integrated microfluidic cooling structure determined using a method according to the first aspect of the present invention;
Figure 8 schematically illustrates a multi-layer semiconductor device with a microfluidic cooling structure determined using a method according to the first aspect of the present invention;
Figure 9 schematically illustrates a multi-layer semiconductor device, with a microfluidic cooling structure determined using a method according to the first aspect of the present invention, on a substrate;
Figure 10 schematically illustrates a multi-layer semiconductor device on a substrate with additional chiplets on the substrate, with a microfluidic cooling structure determined using a method according to the first aspect of the present invention;
Figure 11 schematically illustrates a multi-layer semiconductor device with multiple heat-generating elements, with a microfluidic cooling structure determined using a method according to the first aspect of the present invention;
Figure 12 schematically illustrates a multi-layer semiconductor device with a plurality of microfluidic layers, with the microfluidic cooling structure determined using a method according to the first aspect of the present invention; and
Figure 13 schematically illustrates a cross-section of a chip separated from a microfluidic cooling structure, with the microfluidic cooling structure determined using a method according to the first aspect of the present invention, by an intermediate thermal interface.

### Detailed description of the drawings

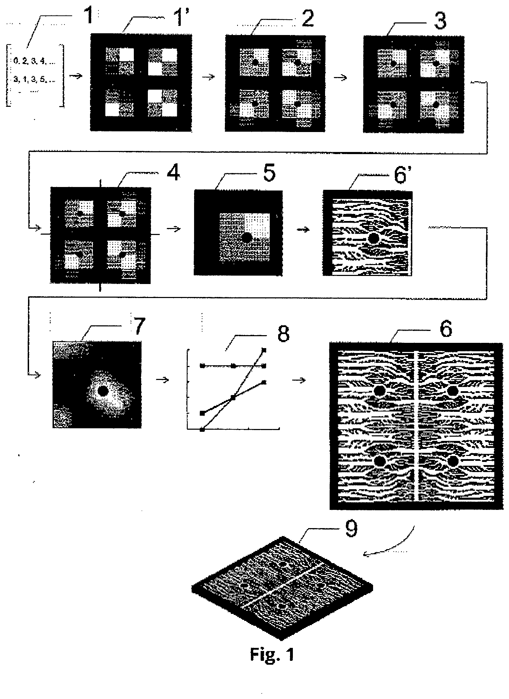

**Fig. 1** schematically illustrates an embodiment of the method for determining a manufacturable cooling structure for cooling a semiconductor device during operation. The method receives as input an array of numbers 1 indicative of a spatial power distribution of the semiconductor device. This array of numbers 1 is converted to a spatial power distribution map 1'. Constraints 2 may be added to the spatial power distribution map 1', which constraints are schematically illustrated by four black dots and the black stripes around the circumference of the drawing in Fig. 1. Inlets/outlets 3 of a manifold are schematically indicated by the striped rectangles in Fig. 1. Through these inlets/outlets 3, cooling liquid enters a - subsequently determined - cooling structure. In the embodiment of Fig. 1, it is assumed that the positions for inlets/outlets 3 are predetermined. Next, potential symmetries 4 in the spatial power distribution map are determined. Such symmetries 4 may often arise in practice as integrated circuits, for example, often comprise repetitions of base circuit elements. Recognizing symmetries may help in simplifying computations for determining a cooling structure. In the embodiment of Fig. 1, for example, two axes of symmetry are shown, and the determining of the cooling structure may be carried out for only one of the four shown quadrants, i.e., for a reduced domain 5. (Simulated) cooling behaviour of the determined cooling structure 6' on the part of the semiconductor device corresponding to the reduced domain 5 is visualised as a temperature map 7, and design validation 8 typically takes place thereafter. If the cooling behaviour of the determined cooling structure 6' is determined sufficient, for example, the entire cooling structure 6 may be determined by exploiting previously determined symmetries and boundary conditions. The cooling structure 6 is provided in a file format suitable for manufacturing. The manufactured cooling structure 9 may be used for cooling the semiconductor device to which it is adapted.

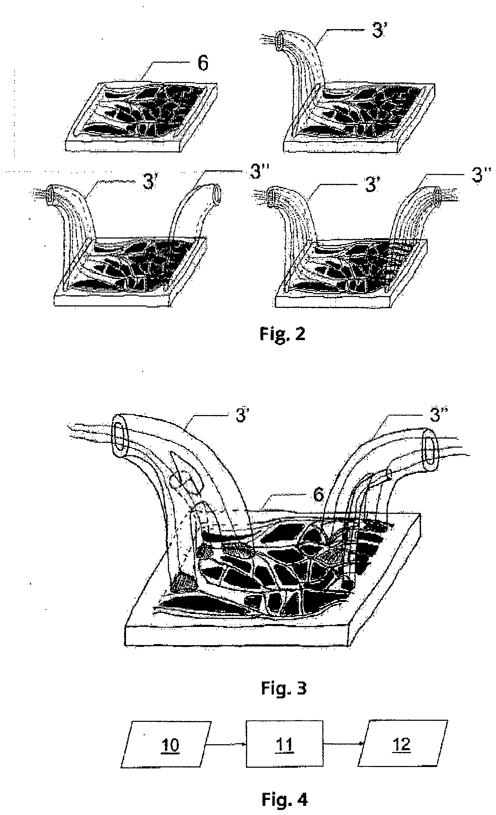

**Fig. 2** schematically illustrates a microfluidic cooling structure with a separately designed manifold. The geometry of the microfluidic channels of the cooling structure 6 may be the result of a 2D/2.5D topology optimization and the inlet manifold 3' and outlet manifold 3" of the cooling system is determined by a 3D topology optimization with fixed feeding/extraction openings. In this case, the problems of cooling structure design and manifold design are independent in the sense that their topology optimization can run parallelly since their common interface (the aforementioned openings) has an a priori fixed geometry and position.

**Fig. 3** schematically illustrates a microfluidic cooling structure which is jointly designed with a manifold. Both the channels of the cooling structure 6 and the inlet manifold 3' and outlet manifold 3" of the cooling system are the results of a joint 3D topology optimization with free feeding/extraction openings for the manifolds. Two different geometry parametrizations may be used, one for the cooling structure and one for the manifolds, allowing the manufacturing of each individual component. The advantage of this decomposition of the topology optimization in 2D channels and 3D inlet-outlet manifolds is that optimization of the 2D channels uses the entire physics equations (Navier-Stokes equations and heat transfer equations) while optimization of the 3D inlet-outlet manifolds uses only the Navier-Stokes equations; these decomposed topology optimizations are therefore coupled to let the optimization algorithm design a more optimized geometry compared to a separate design of manifolds and cooling structure.

**Fig. 4** schematically illustrates a method according to the invention. The method receives as input 10 at least i) physical parameters of the semiconductor device, wherein the physical parameters are related to physical properties of the semiconductor device, and ii) an array of numbers indicative of a spatial power distribution of the semiconductor device, determines 11 a cooling structure based on the received input 10, and provides as output 12 the determined cooling structure in a file format/data format suitable for manufacturing.

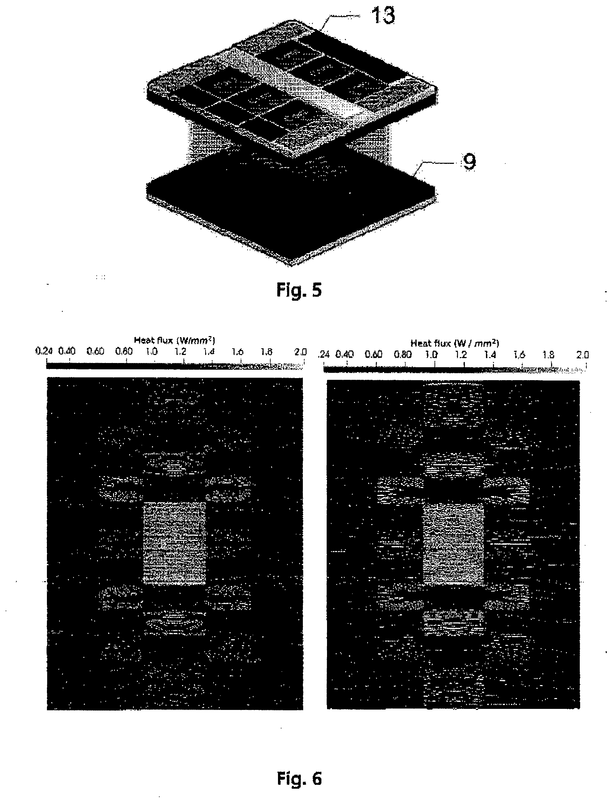

Fig. 5 schematically illustrates a semiconductor device with a cooling structure provided on a separate die. Device logic 13 of the semiconductor device is provided on a first die and the manufactured cooling structure 9 is provided on a second die. The second die can be bonded or attached to the first die to enable cooling of the device logic 13, e.g., embodied as an integrated circuit. Alternatively, both device logic and cooling structure may share one die, being provided on opposite sides of the one die.

**Fig. 6** schematically illustrates an overly of a spatial power distribution map received as input and the corresponding determined (optimized) cooling structure provided as output of the method according to the first aspect of the present invention. The numbers in the legend of Fig. 6 are related to heat flux with units of Watt per square millimetre. Regions with higher heat flux have more narrow channels to provide more surface area and therefore heat transfer, while colder regions with smaller heat flux have wider channels to let the cooling liquid flow through with a lower pressure difference. The left panel schematically illustrates a low Reynolds number (viscous) case, while the right panel a high Reynolds (inertial) case. For the latter, the produced fins are shorter in the streamwise direction and the flow follows a rather more curved flow pattern, while for the former, the produced fins are longer in the streamwise direction and the flow follows a rather straighter flow pattern. The evident visual differences between the two optimized channel geometries demonstrate clearly the need for a custom design, tailored to every different application.

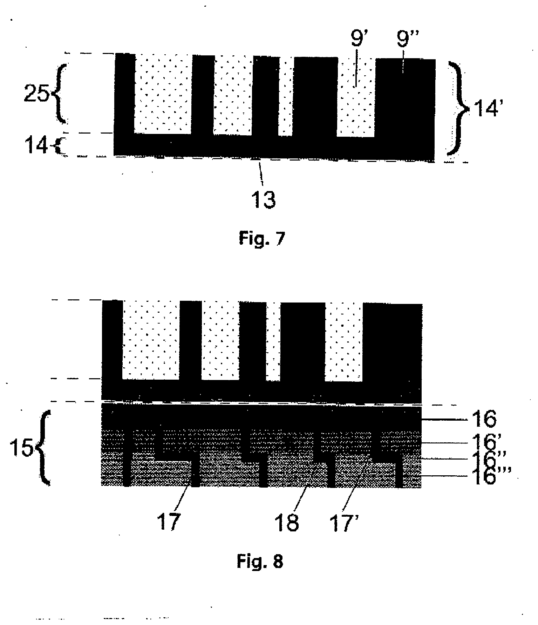

**Fig. 7** schematically illustrates a cross-section of a semiconductor device with an integrated microfluidic cooling structure. The semiconductor device can be modelled as a 2-layer system with an integrated microfluidic cooling structure layer 25 and solid material layer 14. Together, these two layers represent the total thickness 14' of the semiconductor device. Power is dissipated on the opposite side of the microfluidic cooling structure layer in the active region of the semiconductor device comprising device logic 13. The microfluidic cooling structure layer comprises voids 9' where fluid can pass through and solid regions 9". The determination of the optimal distribution of voids and solid regions is performed by a method according to the first aspect of the present invention.

**Fig. 8** schematically illustrates a multi-layer semiconductor device. In addition to the active region 13 of the semiconductor device which is modelled in the embodiment of Fig. 7, redistribution layers (RDL) 15 may be modelled as well. The RDL layers comprise multiple conductive and/or dielectric elements 16, 16', 16", 16‴. Each layer can either have uniform material properties 16 or non-uniform properties 16', 16", 16‴. Layers can have vias extending through the layer 17, 17', as well as lateral metallic traces 18. Each component in this multi-layer system and the complete structure of RDL layers 15 can be modelled with their respective material properties to form an extended conduction model, to capture the conduction of heat close to the heat source (e.g., the device logic 13) more accurately, and thereby improve cooling structure determination by a method according to the first aspect of the present invention.

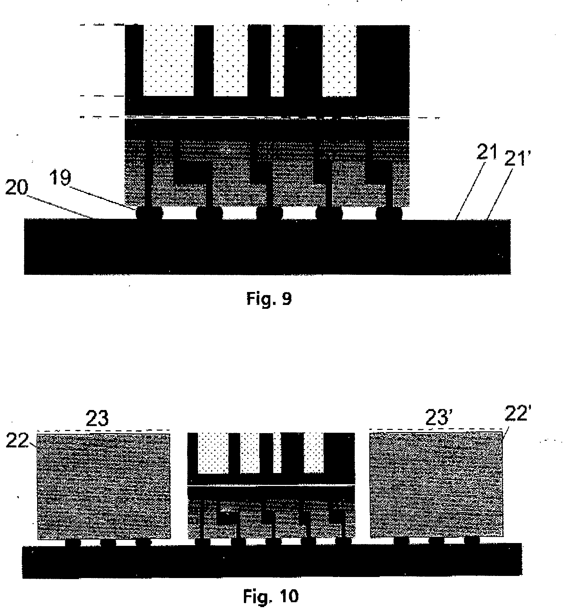

**Fig. 9** schematically illustrates a multi-layer semiconductor device on a substrate. The shown multi-layer semiconductor device corresponds to the embodiment shown in Fig. 8. Solder bumps 19 and the underlying substrate 20 are also considered (as part of an extended conduction model) during the determining of the cooling structure by a method according to the first aspect of the present invention. The substrate 20 may be a printed circuit board (PCB) or an interposer. Additional heterogeneity such as layers with varying material properties 21, 21' within the substrate 20 can be included during the determining of the cooling structure.

**Fig. 10** schematically illustrates a multi-layer semiconductor device on a substrate with additional chiplets on the substrate. In addition to the multi-layer structure shown in Fig. 9, additional chiplets 22, 22' are considered during the determining of the cooling structure by a method according to the first aspect of the present invention. These chiplets can, for example, be memory dies which are laterally positioned next to the central computing die. These chiplets may be modelled with the same level of granularity and layers as described in Figs. 7 to 9. In addition, the power dissipation in these chiplets may also be included in the optimization method of the method according to the first aspect of the present invention. In addition, a microfluidic cooling may be integrated inside these chiplets as well, or alternatively, a fixed heat transfer coefficient may be assumed on the top surface 23, 23' of the chiplets 22, 22' to mimic a conventional heat sink or cold plate positioned on top of the chiplets.

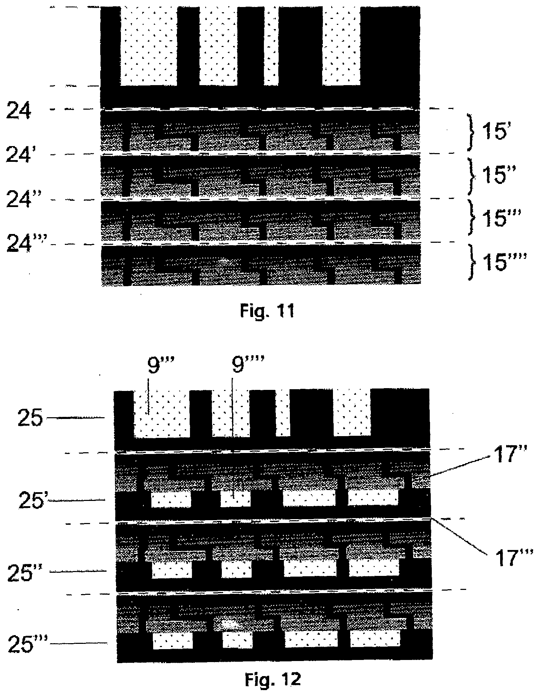

**Fig. 11** schematically illustrates a multi-layer semiconductor device with multiple elements of heat-generating elements. In contrast to the embodiments of Figs. 7 to 10, in Fig. 11 multiple layers 15', 15", 15‴, 15ʺʺ of heat-generating elements 24, 24', 24", 24‴ are stacked. A conduction model used by the method according to the first aspect of the present invention can be extended to include these multiple layers 15', 15", 15'", 15ʺʺ. During optimization carried out by the method according to the first aspect of the present invention, temperature on all the multiple heat-generating layers may be considered in a loss function, and the design of the microfluidic cooling structure may be optimized to minimize the temperature of each heat-generating layer in the multi-layer stack shown in Fig. 11.

**Fig. 12** schematically illustrates a multi-layer semiconductor device with a plurality of microfluidic layers. Differing from the embodiment shown in Fig. 11, multiple microfluidic cooling structure layers 25, 25', 25", 25‴ are vertically stacked in-between heat-generating elements. The method according to the first aspect of the present invention may simultaneously optimize the shape of the multiple microfluidic cooling structure layers 25, 25', 25", 25‴ based on the power dissipation (spatial power distribution map(s)) and correspond temperature of multiple heat-generating layers. Constraints 2 may be included for the positioning of solid material in the microfluidic layers such as vias 17" that pass through a solid layer 17‴ to provide electrical connection between the multiple layers.

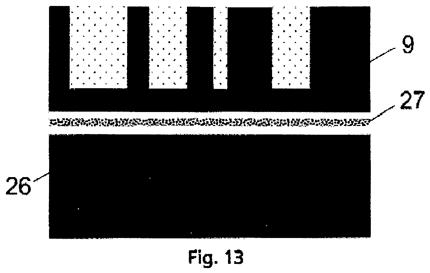

**Fig. 13** schematically illustrates a cross-section of a chip separated from a microfluidic cooling structure by an intermediate thermal interface. The chip 26 of the semiconductor device can be a single-layer chip or a multi-layer chip. The chip 26 is separated from the microfluidic cooling structure 9 with an intermediate thermal interface 27. A method according to the first aspect of the present invention may consider may consider both the chip 26 and the thermal interface 27 in order to determine an optimal shape of cooling channels of the cooling structure 9.

## Claims

1. Method for determining a manufacturable cooling structure (6,6') for cooling a semiconductor device (9,13) during operation, wherein the method receives as input (10) at least i) physical parameters of the semiconductor device, wherein the physical parameters are related to physical properties of the semiconductor device, and ii) an array of numbers (1) indicative of a spatial power distribution of the semiconductor device, wherein the method comprises the following steps:
1) determining (11), using an optimization algorithm, a cooling structure (6,6') based on the received input (10), and
2) providing as output (12) the determined cooling structure (6,6') in a data format based on which the determined cooling structure (6,6') can be physically manufactured (9).

2. Method according to claim 1, wherein the physical parameters comprise i) dimension parameters of the semiconductor device, the dimension parameters being embodied at least as width, length, and thickness of the semiconductor device, and/or ii) material properties of a die of the semiconductor device with device logic (13) on the die, and/or iii) material properties of a cooling fluid of the cooling structure (6,6'), wherein the cooling fluid is embodied as water, or as water-glycol mixtures, or as refrigerant, or as dielectric coolant, or as mineral oil, and/or iv) material properties of a physical connection between a cooling structure die (9) with the cooling structure and a die of the semiconductor device with device logic (13) on the die.

3. Method according to claim 2, wherein the cooling structure (6,6') determined using the optimization algorithm is configured to be physically manufactured at least partly on the die of the semiconductor device with device logic (13), and/or wherein the cooling structure (6,6') determined using the optimization algorithm is configured to be physically manufactured at least partly on the cooling structure die, with the cooling structure die being configured to be bonded and/or attached to the die of the semiconductor device with device logic (13).

4. Method according to any one of the preceding claims, wherein the array of numbers (1) indicative of a spatial power distribution of the semiconductor device is embodied as a two-dimensional array of power (1') dissipated per unit area of the semiconductor device.

5. Method according to any one of the preceding claims, wherein the method further receives as input at least one region of the semiconductor device as at least one design constraint (2), and wherein the optimization algorithm is constrained to determine a cooling structure (6,6') with no cooling structure parts in at least one region of the cooling structure corresponding to the at least one region of the semiconductor device.

6. Method according to any one of the preceding claims, wherein a loss function and/or optimization constraint used by the optimization algorithm is based on at least one of i) pressure, ii) flow rate, iii) maximum temperature, iv) average temperature, v) median temperature, vi) temperature gradient, and wherein the optimization algorithm performs extremization, in particular minimization or maximization, of the loss function, the loss function in particular being constrained by the at least one optimization constraint.

7. Method according to any one of the preceding claims, wherein the optimization algorithm uses a two-and-a-half-dimensional model during optimization, wherein the optimization algorithm is configured to assume a parabolic flow profile in an out-of-plane dimension of the cooling structure during the determining (11) of the cooling structure (6,6').

8. Method according to any one of the preceding claims, wherein the optimization algorithm uses as further optimization constraint at least one manufacturing constraint, in particular lithography constraints and etching constraints, relating to a manufacturing process of the determined cooling structure (6,6').

9. Method according to any one of the preceding claims, wherein the optimization algorithm determines a number of inlets (3') and outlets (3") of the-cooling structure (6,6') as well as positions of the determined inlets and outlets by taking into account packaging methodology constraints.

10. Method according to any one of claims 6 to 9, wherein the optimization algorithm used for determining (11) the cooling structure based on the received input comprises the following steps:
1) determining a mesh, in particular embodied as a regularly spaced mesh or embodied as a mesh based on the array of numbers indicative of a spatial power distribution and/or on the at least one design constraint and/or on the manufacturing constraints,
2) mapping the array of numbers indicative of a spatial power distribution onto the mesh, and optionally mapping the at least one design constraint onto the mesh,
3) starting with an initialization geometry of the cooling structure on the mesh, adapting a current geometry of the cooling structure in an iterative manner until a final geometry of the cooling structure is determined, wherein at each optimization iteration the following sub-steps are carried out i) simulating a physical behaviour of the cooling structure with the current geometry using at least modelling equations, in particular Navier-Stokes equations and heat transfer equations, and the physical parameters, ii) determining, based on the simulated physical behaviour, at least one current value of the loss function, iii) determining at least one gradient of the, optionally constrained, loss function with respect to variations in the geometry of the cooling structure away from the current geometry, in particular using an adjoint method, and iv) providing the determined at least one gradient to a set of, in particular programmed, equations which updates the current geometry in such a way that the, optionally constrained, loss function is further extremized.

11. Method according to claim 10, wherein the initialization geometry of the cooling structure (6,6') is determined based on the array of numbers (1) indicative of a spatial power distribution.

12. Semiconductor device (9,13) comprising a cooling structure (9) determined using a method according to any one of claims 1 to 11, wherein the cooling structure is manufactured using optical lithography.

13. Semiconductor device (9,13) according to claim 12, wherein device logic (13) of the semiconductor device is provided on one side of a die of the semiconductor device, and wherein the cooling structure is provided on the opposite side of the die with respect to the side on which the device logic is provided.

14. Semiconductor device (9,13) according to claim 12, wherein the semiconductor device comprises a first die on which device logic (13) of the semiconductor device is provided, and wherein the semiconductor device comprises a second die on which the cooling structure (9) is provided, wherein a physical connection between the first die and the second die is embodied as bonding or attachment between the first die and the second die.

15. Electronic design automation tool, wherein the electronic design automation tool comprises programme code, which when executed on a computing device, causes the computing device to carry out a method according to any one of claims 1 to 11 for determining a cooling structure (6,6"), and wherein the electronic design automation tool further comprises programme code, which when executed on a computing device, causes the computing device to carry out floorplanning providing a floorplan of device logic of a semiconductor device and/or post-layout analysis, and wherein the electronic design automation tool is configured to determine, based on at least the floorplan and using post-layout analysis, an array of numbers (1) indicative of a spatial power distribution of the semiconductor device, and wherein the programme code of the electronic design automation tool for determining a cooling structure is configured to use the accordingly determined array of numbers indicative of a spatial power distribution as input.
